# EUROPEAN PATENT SPECIFICATION

(11) **EP 2 280 443 B1**
(45) Date of publication and mention of the grant of the patent: **12.03.2014**
(21) Application number: 09750582.0
(22) Date of filing: 19.05.2009
(51) Int. Cl.: H01M 10/06, H01M 4/68, H01M 4/73

(54) **LEAD STORAGE BATTERY AND PROCESS FOR PRODUCING THE LEAD STORAGE BATTERY**
BLEIAKKUMULATORBATTERIE UND VERFAHREN ZUR HERSTELLUNG DER BLEIAKKUMULATORBATTERIE
BATTERIE AU PLOMB ET SON PROCÉDÉ DE FABRICATION

(30) Priority: 20.05.2008 JP 2008132032
(43) Date of publication of application: 02.02.2011
(73) Proprietor: GS Yuasa International Ltd., Kisshoin Minami-ku, Kyoto-shi Kyoto 601-8520 (JP)
(72) Inventor: INAGAKI Satoshi, Kyoto-shi Kyoto 601-8520 (JP)
(74) Representative: Müller-Boré & Partner Patentanwälte PartG mbB
(86) International application number: PCT/JP2009/059225
(87) International publication number: WO 2009/142220

(56) References cited:
- WO-A1-2006/049295
- JP-A- 1 035 867
- JP-A- 59 000 870
- JP-A- 62 208 568
- JP-A- 63 213 263
- JP-A- 63 244 568
- JP-A- 2006 185 678
- JP-A- 2006 210 059
- JP-A- 2007 035 339
- US-A- 4 617 244
- US-A- 5 945 236
- US-A1- 2004 018 427

## Description

### TECHNICAL FIELD

The invention relates to a lead-acid battery and a method for manufacturing the same.

### BACKGROUND ART

Since having stable performances for a relatively low cost, recently, a lead-acid battery has been in high demand as a battery for automobiles and a battery for backup.

A general lead-acid battery is manufactured by stacking or winding a positive electrode plate and a negative electrode plate through a separator interposed therebetween, storing them in a container, and pouring an electrolyte solution containing an aqueous diluted sulfuric acid solution as a main component in the container.

As the positive electrode plate and negative electrode plate of a lead-acid battery, those obtained by maintaining active materials on lattice-like current collectors made of lead or lead alloy are employed. A current collector to be used for a general lead-acid battery has a lattice-like grid part, a rim part continuously formed in the rim of the grid part, and an ear part formed to protrude from the rim part for current collection.

The following has been known as one of causes for terminating the life of such a lead-acid battery. When charge-discharge is repeated in the lead-acid battery, fine positive active material (free active material) dropped off the positive electrode plate is suspended in the electrolyte solution due to the gas generated during charge and adheres to the ear part and rim part of the negative electrode current collector and the adhesion is advanced to deposit sponge-like lead (referred to as moss). If the moss is continuously deposited, the moss may reach the positive electrode plate and possibly cause short circuit and accordingly, it causes a problem that the life of the lead-acid battery is terminated.

As a means for solving this problem, Patent Document 1 proposes a negative electrode current collector in which a surface layer with a prescribed composition is formed on an ear part and a rim part.
Patent Document 1: JP-A No. 2006-156371.

### DISCLOSURE OF THE INVENTION

### (Problems to be Solved by the Invention)

In the invention disclosed in Patent Document 1, since the negative electrode current collector on the surface of which a layer (referred to as surface layer) with prescribed composition is formed is employed, moss deposition on the ear part and the rim part can be prevented. As a result, according to the invention disclosed in Patent Document 1, the cycle life can be improved compared to that of a battery using a negative electrode current collector having no surface layer.

Incidentally, with respect to a lead-acid battery for a cycle application, a stratification phenomenon such that the specific gravity of an electrolyte solution becomes higher in the lower part of an electrode plate sometimes occurs to accumulate lead sulfate. Since the stratification phenomenon of the electrolyte solution cannot be suppressed merely by using the negative electrode current collector having a surface layer described above for improving the cycle life, lead sulfate tends to be accumulated in the lower part of the electrode plate and the lower part of the electrode plate may not be used efficiently in some cases. In such a case, the cycle life of the lead-acid battery cannot be improved sufficiently.

A method known for suppressing such a stratification phenomenon of the electrolyte solution is a method of adding silica fine particles and aluminum sulfate to the electrolyte solution (e.g., see Patent Document 2). However, since a free active material dropping off the positive electrode is increased in a case where silica fine particles and aluminum sulfate are merely added to the electrolyte solution, moss deposition on the negative electrode current collector cannot be prevented and the life of the lead-acid battery is quickly terminated.

In view of the above state of the art, the present invention has been completed and an object of the present invention is to provide a lead-acid battery with a sufficiently improved cycle life.
Patent Document 2: JP-A No. 2006-185743

### (Means for Solving the Problems)

The present inventor has made various investigations for solving the above-mentioned problems and consequently found that use of a negative electrode current collector on the surface of which a layer with prescribed composition is formed and an electrolyte solution containing one or more substances selected from sodium ion, potassium ion, magnesium ion, aluminum ion, phosphoric acid, and boric acid makes it possible to suppress accumulation of lead sulfate in the lower part of an electrode plate and to obtain a remarkable effect of improving the cycle life.

That is, the present invention provides a lead-acid battery including a positive electrode plate, a negative electrode plate, and an electrolyte solution, wherein the negative electrode plate includes a negative electrode current collector having a lattice-like grid part, a rim part continuously formed in the rim of the grid part, and an ear part formed to protrude from the rim part for current collection, wherein a surface layer containing an alloy or a metal selected from a Pb-Sn-based alloy, a Pb-Sb-based alloy, a Pb-Sn-Sb-based alloy, and Sn is formed on the surface of at least one of the rim part and the ear part, and wherein the electrolyte solution contains one or more substances selected from sodium ion, potassium ion, magnesium ion, aluminum ion, phosphoric acid, and boric acid.

Further, the present invention provides a method for manufacturing a lead-acid battery including a positive electrode plate, a negative electrode plate, a separator, and an electrolyte solution, wherein the negative electrode plate includes a negative electrode current collector having a lattice-like grid part, a rim part continuously formed in the rim of the grid part, and an ear part formed to protrude from the rim part for current collection, the method including the steps of producing a rolled sheet by rolling a laminated body obtained by laminating a sheet containing an alloy or a metal selected from a Pb-Sn-based alloy, a Pb-Sb-based alloy, a Pb-Sn-Sb-based alloy, and Sn on both faces of a lead-containing plate-like substrate; producing a negative electrode plate by using a negative electrode current collector obtained by arranging the rolled sheet as a surface layer in a portion corresponding to at least one of the rim part and the ear part and expanding the rolled sheet; housing an electrode plate group obtained by stacking or winding the negative electrode plate and a positive electrode plate through a separator interposed therebetween in a container; and injecting an electrolyte solution containing one or more substances selected from sodium ion, potassium ion, magnesium ion, aluminum ion, phosphoric acid, and boric acid to the contained where the electrode plate group is housed.

According to the present invention, since including a negative electrode current collector in which a surface layer with specified composition is formed on at least one of the ear part and the rim part and an electrolyte solution containing one substance among the above-mentioned metal ions, phosphoric acid, and boric acid, a lead-acid battery with suppressed accumulation of lead sulfate in the lower part of an electrode plate and the sufficiently improved cycle life can be provided.

With respect to the lead-acid battery of the present invention, the following configurations are preferable.

The surface layer is preferably a layer containing Pb and Sn where Sn is contained at a ratio of 10% by mass or more, a layer containing Pb and Sb where Sb is contained at a ratio of 10% by mass or more, a layer containing Pb, Sn, and Sb where Sn and Sb are contained at a ratio of 10% by mass or more in total, or a layer containing Sn.

The surface layer is preferably formed in the entire region of the rim part and the entire region of the ear part.

The thickness of the surface layer is preferably 5 µm or more and 200 µm or less.

Further, the electrolyte solution is preferable to contain one or more substances selected from 0.42 mol/L or less of magnesium ion, 0.29 mol/L or less of aluminum ion, and 0.20 mol/L or less of phosphoric acid.

With respect to the method for manufacturing a lead-acid battery of the present invention, the following configurations are preferable.

The sheet to be laminated on both faces of the substrate to be used in the step of producing a rolled sheet is preferable to be a sheet containing an alloy or a metal selected from a Pb-Sn-based alloy containing 10% by mass or more of Sn, a Pb-Sb-based alloy containing 10% by mass or more of Sb, a Pb-Sn-Sb-based alloy containing 10% by mass or more of Sn and Sb in total, and Sn.

The electrolyte solution to be injected to the container is preferably an electrolyte solution containing one or more substances selected from 0.42 mol/L or less of magnesium ion, 0.29 mol/L or less of aluminum ion, and 0.20 mol/L or less of phosphoric acid.

The negative electrode current collector to be used in the step of producing a negative electrode plate is preferably a negative electrode current collector obtained by arranging the rolled sheet as a surface layer in portions corresponding to the entire region of the rim part and the entire region of the ear part and expanding the rolled sheet. Further, the negative electrode current collector is preferably a negative electrode current collector having a surface layer layer derived from the rolled sheet with a thickness of 5 µm or more and 20 µm or less in the surface.

### (Effect of the Invention)

According to the present invention, a lead-acid battery with the sufficiently improved cycle life can be provided.

### BRIEF DESCRIPTION OF THE DRAWINGS

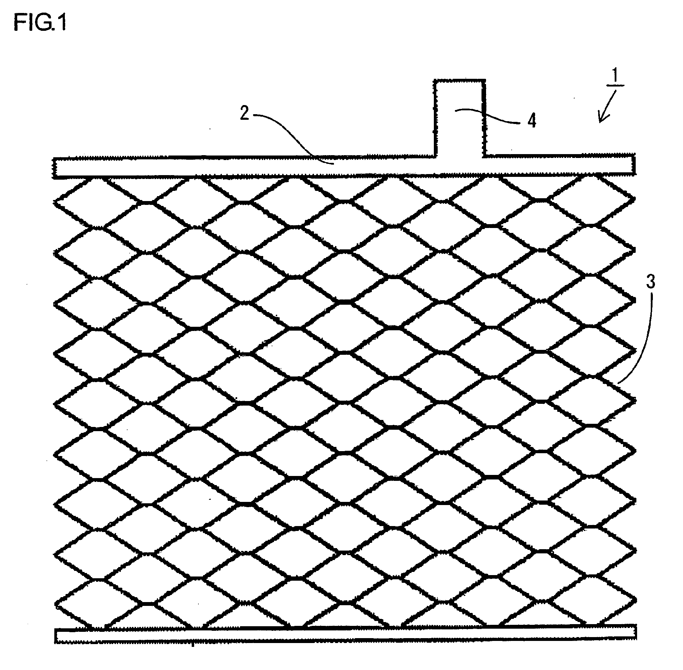

[Fig. 1] A schematic drawing showing one example of a negative electrode current collector to be used for the lead-acid battery of the present invention.

### DESCRIPTION OF REFERENCE SIGNS

1. Negative electrode current collector
2. Rim part
3. Grid part
4. Ear part

### BEST MODE FOR CARRYING OUT THE INVENTION

The lead-acid battery of the present invention includes, as a positive electrode plate and a negative electrode plate, current collectors made of lead or a lead alloy (e.g. alloy with composition of Pb-0.05% Ca-0.5% Sn) produced by a gravity casting method, an expanding method or a punching method.

In this specification, the description of, for example, Pb-0.05% Ca-0.5% Sn means that a lead alloy containing Pb, Ca, and Sn where Ca is contained at a ratio of 0.05% by mass and Sn is contained at a ratio of 0.5% by mass.

As shown in Fig. 1, positive electrode current collector and negative electrode current collector 1 have a lattice-like shape as a whole and include a lattice-like grid part 3 and band-like parts continuously formed in the upper and lower rims thereof. An ear part 4 for current collection is protruded and formed in the band-like part (rim part 2) in the upper rim side of the grid part 3 among the band-like parts.

A layer containing an alloy or a metal (corresponding to the surface layer of the present invention) selected from a Pb-Sn-based alloy, a Pb-Sb-based alloy, a Pb-Sn-Sb-based alloy, and Sn is formed on the surface of at least one of the rim part 2 and the ear part 4 of the negative electrode current collector 1.

In the present invention, the surface layer is preferably a layer containing Pb and Sn where Sn is contained at a ratio of 10% by mass or more, a layer containing Pb and Sb where Sb is contained at a ratio of 10% by mass or more, a layer containing Pb, Sn, and Sb where Sn and Sb are contained at a ratio of 10% by mass or more in total, or a layer containing Sn. A method for forming these preferable surface layers will be described later.

The surface layer may contain elements other than the above-mentioned elements.

The thickness of the surface layer is generally 5 µm to 200 µm. It is because if the thickness is less than 5 µm, the effect of preventing a decrease of the cycle life performance will be lowered and if the thickness exceeds 200 µm, the thickness of the negative electrode current collector 1 becomes great and the lead-acid battery becomes large or heavy.

In the present invention, the surface layer may be formed in at least one of the rim part 2 and the ear part 4 and may be formed in a portion or the entire region of the surface of the rim part 2 and in a portion or the entire region of the surface of the ear part 4. In consideration of the effect of preventing moss deposition, the surface layer is preferable to be formed in both of the rim part 2 and the ear part 4 and more preferably formed in the entire region of the rim part 2 and the entire region of the ear part 4.

As a method for forming the surface layer in the rim part 2 and the ear part 4, for example, a rolling method and a hot-dipping method can be exemplified. The rolling method is a method of laminating a material on which the surface layer is formed (e.g. metal plate or alloy plate) and a material for forming the surface layer (metal sheet or alloy sheet) and rolling them. On the other hand, the hot-dipping method is a method in which a portion on which the surface layer is formed (specifically, rim part 2 and ear part 4 of negative electrode current collector 1) is immersed in a melting bath where the material for forming the surface layer is melt to be plated. Among these methods, the rolling method is preferable for the present invention.

A method for forming the surface layer by a rolling method will be specifically described. A tin sheet, or various kinds of alloy sheets (sheets containing a Pb-Sn-based alloy, a Pb-Sb-based alloy, and a Pb-Sn-Sb-based alloy) for forming the surface layer is laminated on both faces of a plate-like lead alloy (substrate) and the resultant is rolled by rolling rollers to produce a rolled sheet (step of producing a rolled sheet). Next, while the position of the rolled sheet is adjusted so as to form the surface layer on the desired position of the negative electrode current collector 1, the rolled sheets is expanded (expanding method) by an expanding machine to give the negative electrode current collector 1 having the surface layer in the prescribed position. Additionally, in the rolling method, the thickness of the alloy to be the substrate, the thickness of the sheet to be the surface layer, or the thickness of the sheet after rolling is adjusted so that the thickness of the surface layer can be adjusted easily.

In addition, in order to form a surface layer with preferred composition on the negative electrode current collector, in the step of producing a rolled sheet, a sheet containing an alloy or a metal selected from a Pb-Sn-based alloy containing 10% by mass or more of Sn, a Pb-Sb-based alloy containing 10% by mass or more of Sb, a Pb-Sn-Sb-based alloy containing 10% by mass or more of Sn Sb in total, and Sn is used as a sheet to be laminated on both faces of the substrate.

A method for forming the surface layer by the hot-dipping method will be specifically described. First, a melting bath where a metal or an alloy for forming the surface layer (specifically, melting bath of Sn or a Pb-50% Sn alloy) is made ready. The rim part 2 and the ear part 4 are immersed in the melting bath to form the surface layer. According to this hot-dipping method, the position where the surface layer is formed can be changed by changing the position of the negative electrode current collector 1 to be immersed in the melting bath. Additionally, in a case where the surface layer is formed in an unnecessary part, the unnecessary part can be removed by polishing the metal surface.

Next, the method for manufacturing a lead-acid battery of the present invention will be briefly described.

A positive electrode plate is produced by filling a positive electrode current collector with a positive electrode paste obtained by mixing lead powder containing lead oxide as a main component and the prescribed amount of diluted sulfuric acid.

The negative electrode plate is produced by filling a negative electrode current collector 1 in which a surface layer is formed by the above-mentioned method with a paste for a negative electrode plate obtained by adding lignin, a barium compound, carbon, and a prescribed amount of diluted sulfuric acid to lead powder containing lead oxide as a main component to be mixed (step of producing a negative electrode plate).

The positive electrode plate and the negative electrode plate thus produced are stacked or wound through a separator made of a polyethylene resin interposed therebetween to produce an unformed electrode plate group, which is inserted in a battery container and a cover is welded. After an electrolyte solution containing a diluted sulfuric acid solution as a main component is injected to the battery container, formation in the container is carried out to obtain the lead-acid battery of the present invention.

The electrolyte solution to be used in the present invention contains one or more substances selected from sodium ion, potassium ion, magnesium ion, aluminum ion, phosphoric acid, and boric acid.

The electrolyte solution to be used in the present invention can be prepared by adding one or more substances selected from substances which can produce sodium ion (Na⁺), potassium ion (K⁺), magnesium ion (Mg²⁺), or aluminum ion (Al³⁺), phosphoric acid, and boric acid to diluted sulfuric acid as a main component. Specific examples of the substances which can produce Na⁺, K⁺, Mg²⁺, or Al³⁺ when being dissolved in diluted sulfuric acid include sodium sulfate, sodium hydroxide, magnesium sulfate, magnesium hydroxide, metal magnesium, aluminum sulfate, aluminum hydroxide, metal aluminum, potassium sulfate and potassium hydroxide.

In the present invention, preferable contents [molar concentration (mol/L) in electrolyte solution] of these metal ions, phosphoric acid, and boric acid are as follows. It is preferable that the content of sodium ion is 0.70 mol/L or lower; the content of potassium ion is 0.70 mol/L or lower; the content of magnesium ion is 0.42 mol/L or lower; the content of aluminum ion is 0.29 mol/L or lower; the content of phosphoric acid is 0.20 mol/L or lower; and the content of boric acid is 0.24 mol/L or lower. It is because if the metal ions or compounds exceeding the above-mentioned contents are contained, the discharge capacity may be decreased in some cases.

In the present invention, from the viewpoint that the effect of improving the life performance can be exerted by addition even in a small amount, the electrolyte solution preferably contains one or more substances selected from 0.42 mol/L or less of magnesium ion, 0.29 mol/L or less of aluminum ion, and 0.20 mol/L or less of phosphoric acid.

### [Examples]

Hereinafter, the present invention will be described more detail with reference to examples.

### <Example group 1>

Using electrolyte solutions which were obtained by adding various kinds of additives in various amounts, lead-acid batteries with 55D23 size defined in JISD 5301 and having a surface layer containing Pb and Sn where Sn was contained at 25% by mass were produced by the following method and a life performance test was carried out.

### (1) Production of negative electrode current collector

A plate-like Pb-0.05% Ca-0.5% Sn alloy with a thickness of 10 mm was used as a substrate for a negative electrode current collector and an alloy sheet containing Pb and Sn where Sn was contained at a ratio of 25% by mass and having a thickness of 0.5 mm was used as a metal sheet for forming a surface layer. The alloy sheets were laminated on both faces of the substrate of the negative electrode current collector and the resultant was rolled by rolling rollers to obtain a rolled sheet with a thickness of 1.0 mm. The thickness of the surface layer formed in the rolled sheet was about 50 µm.

Next, while the position of the rolled sheet was adjusted to form the surface layer in a desired position of the negative electrode current collector, the rolled sheet was expanded by a reciprocal expanding machine to produce a negative electrode current collector in which the surface layer was formed in an ear part and a rim part.

A negative electrode current collector having no surface layer was also produced in order to use the collector for lead-acid batteries as comparative examples.

### (2) Production of negative electrode plate

The negative electrode current collector produced in (1) was filled with a paste for a negative electrode plate obtained by adding lignin, a barium compound, carbon, and a prescribed amount of diluted sulfuric acid to lead powder containing lead oxide as a main component to be mixed and the resulting negative electrode current collector was aged at 35°C for 3 days to produce an unformed negative electrode plate for 55D 23.

### (3) Production of positive electrode plate

As a positive electrode current collector, a rolled sheet made of a Pb-0.05% Ca-1.0% Sn alloy expanded by an expanding machine was used. The positive electrode current collector was filled with a paste for a positive electrode plate obtained by mixing lead powder containing lead oxide as a main component with a prescribed amount of diluted sulfuric acid and the resulting positive electrode current collector was aged at 35°C for 3 days to produce an unformed positive electrode plate for 55D23.

### (4) Production of separator

A separator made of a polyethylene resin produced by an extrusion molding method was folded into two and two sides in side parts were sealed by a mechanical seal to produce a envelope-like separator having an aperture part only in one side.

### (5) Preparation of electrolyte solution

Sodium sulfate, magnesium sulfate, aluminum sulfate, phosphoric acid, and boric acid were added to a diluted sulfuric acid solution with a specific gravity of 1.20 at a temperature of 20°C to give an electrolyte solution containing sodium ion, magnesium ion, aluminum ion, phosphoric acid, or boric acid.

Specifically, sodium sulfate was added in an amount to adjust the content of Na⁺ in the electrolyte solution as described in Table 1, magnesium sulfate was added in an amount to adjust the content of Mg²⁺ in the electrolyte solution as described in Table 1 and aluminum sulfate was added in an amount to adjust the content of Al³⁺ in the electrolyte solution as described in Table 1. Phosphoric acid and boric acid were added to the electrolyte solution in amounts to adjust the contents thereof as described in Table 1, respectively.

Further, an electrolyte solution which did not contain any of sodium sulfate, magnesium sulfate, aluminum sulfate, phosphoric acid, and boric acid (these compounds are collectively referred to as "additives") was produced for use in the lead-acid batteries of comparative examples.

### (6) Production of lead-acid battery

The negative electrode plate produced in (2) was housed in the envelope-like separator produced in (4). Seven sheets of the positive electrode plates produced in (3) and eight sheets of the negative electrode plates housed in the separator were alternately stacked to produce an unformed electrode plate group and the unformed electrode plate group was inserted into a container for 55D23 and a cover was welded. The electrolyte solution prepared in (5) was injected in the container where the unformed electrode plate group was inserted. Thereafter, formation in the container was carried out in a water bath at 25°C (electric quantity: 280% of theoretical capacity of positive active material, formation time: 18 hours) to produce lead-acid batteries with 55D23 size defined in JIS D 5301 (nominal voltage: 12V, rated capacity: 48 Ah).

### (7) Life test evaluation test

Each three lead-acid batteries produced in (6) were used to carry out the *Keifuka-Jumyo-Shiken*(shallow cycle endurance test) defined in JIS D 5301. The life of a battery was determined at a time when the voltage on completion of discharge for determination carried out for every 480 cycles was under 7.2 V and according to the relationship between the number of cycles and the voltage on completion of discharge, the number of cycles when the voltage on completion of discharge became 7.2V was determined to be the number of life cycle. Further, the average value of the numbers of life cycle of three batteries was determined to be the number of life cycle of each kind of lead-acid batteries.

The number of life cycle of each kind of lead-acid batteries was shown as a numeral value relative to 100 which was employed as the number of life cycle of the lead-acid battery of Comparative Example 1, and the value was shown as a life performance ratio in Table 1. The lead-acid battery of Comparative Example 1 was a lead-acid battery using an electrolyte solution containing no additives and a negative electrode current collector having no surface layer.

As the numeral value of the life performance ratio is higher, it can be said that the life performance is improved. In this evaluation test, if the life performance ratio was 213 or higher (life performance ratio of lead-acid battery of Comparative Example 31 (lead-acid battery with most excellent life performance ratio among lead-acid batteries of Comparative Examples), it was determined that the life performance was sufficiently improved.

Table 1 shows the life performance ratio for each type of metal ion or compound (sodium ion, magnesium ion, aluminum ion, phosphoric acid, and boric acid) (in the table, described as "type of ion or compound") contained in each electrolyte solution and its content, and those using electrolyte solutions with the same composition (metal ion or compound contained was the same and content was the same) and using either a negative electrode current collector having no surface layer or a negative electrode current collector having a surface layer were described in parallel. In Table 1, the lead-acid battery of Comparative Example 2, for example, means a lead-acid battery using an electrolyte solution containing 0.07 mol/L of sodium ion and a negative electrode current collector having no surface layer and the lead-acid battery of Example 1 means a lead-acid battery using an electrolyte solution containing 0.07 mol/L of sodium ion and a negative electrode current collector having a surface layer.

**[Table 1]**

| Type of ion or compound | Content (mol/L) | Absence of surface layer | | Presence of surface layer | |
|---|---|---|---|---|---|
| | | Life performance ratio | Example | Life performance ratio | Example |
| None | 0 | 100 | Comparative Example 1 | 194 | Comparative Example 22 |
| Na⁺ | 0.07 | 100 | Comparative Example 2 | 236 | Example 1 |
| Na⁺ | 0.14 | 96 | Comparative Example 3 | 252 | Example 2 |
| Na⁺ | 0.28 | 86 | Comparative Example 4 | 278 | Example 3 |
| Na⁺ | 0.70 | 71 | Comparative Example 5 | 311 | Example 4 |
| Mg²⁺ | 0.04 | 98 | Comparative Example 6 | 285 | Example 5 |
| Mg²⁺ | 0.08 | 90 | Comparative Example 7 | 301 | Example 6 |
| Mg²⁺ | 0.17 | 84 | Comparative Example 8 | 328 | Example 7 |
| Mg²⁺ | 0.42 | 70 | Comparative Example 9 | 352 | Example 8 |
| Al³⁺ | 0.03 | 91 | Comparative Example 10 | 296 | Example 9 |
| Al³⁺ | 0.06 | 85 | Comparative Example 11 | 317 | Example 10 |
| Al³⁺ | 0.12 | 70 | Comparative Example 12 | 351 | Example 11 |
| Al³⁺ | 0.29 | 56 | Comparative Example 13 | 375 | Example 12 |
| Phosphoric acid | 0.03 | 100 | Comparative Example 14 | 270 | Example 13 |
| Phosphoric acid | 0.05 | 97 | Comparative Example 15 | 289 | Example 14 |
| Phosphoric acid | 0.10 | 93 | Comparative Example 16 | 308 | Example 15 |
| Phosphoric acid | 0.20 | 86 | Comparative Example 17 | 346 | Example 16 |
| Boric acid | 0.05 | 99 | Comparative Example 18 | 233 | Example 17 |
| Boric acid | 0.08 | 92 | Comparative Example 19 | 251 | Example 18 |
| Boric acid | 0.16 | 88 | Comparative Example 20 | 284 | Example 19 |
| Boric acid | 0.24 | 86 | Comparative Example 21 | 306 | Example 20 |

From the results shown in Table 1, the followings were understood.

In a comparison between the lead-acid battery of Comparative Example 1 and the lead-acid battery of Comparative Example 22 using electrolyte solutions containing no additives (electrolyte solutions without containing sodium ion, magnesium ion, aluminum ion, phosphoric acid, and boric acid), the life performance ratio of the lead-acid battery of Comparative Example 22 was higher than that of the lead-acid battery of Comparative Example 1. From this reason, it was confirmed that the life performance could be more improved for the lead-acid battery using a negative electrode current collector having a surface layer than the lead-acid battery using a negative electrode current collector having no surface layer.

Further, the result obtained was that the life performance ratio was higher in the case of the lead-acid batteries of Examples 1 to 20 than in the case of lead-acid battery of Comparative Example 22. In the case of the lead-acid batteries of Examples 1 to 20 and the lead-acid battery of Comparative Example 22, it was found that although the same negative electrode current collector was used, the life performance could be further improved by using electrolyte solutions containing sodium ion, magnesium ion, aluminum ion, phosphoric acid, or boric acid for the lead-acid batteries of Examples 1 to 22.

On the other hand, in the case of the lead-acid batteries (Comparative Examples 2 to 21) using a negative electrode current collector having no surface layer, although using the same electrolyte solutions as those used for the lead-acid batteries of Examples 1 to 20, the life performance was lowered. It was supposedly attributed to that moss deposition on the negative electrode current collector could not be prevented merely by using an electrolyte solution containing sodium ion, magnesium ion, aluminum ion, phosphoric acid, or boric acid and thus the life performance was lowered.

According to the above-mentioned result, it can be said that the life performance was sufficiently improved in the case of the lead-acid batteries (Examples 1 to 20) of the present invention using a negative electrode current collector having a surface layer and electrolyte solutions containing sodium ion, magnesium ion, aluminum ion, phosphoric acid, or boric acid.

Further, when it was confirmed whether the specific gravity of the electrolyte solution was different in an upper part and in a lower part by using each one lead-acid battery among the lead-acid batteries (Examples 1 to 20) of the present invention and the lead-acid battery of Comparative Example 22, it was found that although the difference was confirmed in the case of the lead-acid battery of Comparative Example 22, whereas no difference was observed in the case of the lead-acid batteries of Examples 1 to 20. From the result, it was confirmed that the stratification could be also prevented in the case of the lead-acid batteries of Examples 1 to 20 of the present invention.

Among the lead-acid batteries of Examples 1 to 20, those using electrolyte solutions containing particularly magnesium ion, aluminum ion, and phosphoric acid (Examples 5 to 16) showed a good result such that the life performance ratio exceeded 270 even though the contents thereof are small (0.04 mol/L of magnesium ion, 0.03 mol/ L of aluminum ion and 0.05 mol/L of phosphoric acid). From this reason, it is supposed that use of an electrolyte solution containing magnesium ion, aluminum ion, or phosphoric acid is preferable in the present invention.

### <Example group 2>

Next, in order to investigate the composition of the surface layer, the life performance test was carried out after lead-acid batteries using negative electrode current collectors in which surface layers with various compositions were produced.

As a metal sheet for forming the surface layer, an alloy sheet containing Pb and Sn wherein Sn was contained at a ratio of 5% by mass; an alloy sheet containing Pb and Sn wherein Sn was contained at a ratio of 10% by mass; an alloy sheet containing Pb and Sn wherein Sn was contained at a ratio of 25% by mass; an alloy sheet containing Pb and Sn wherein Sn was contained at a ratio of 50% by mass; a sheet containing Sn; an alloy sheet containing Pb and Sb wherein Sb was contained at a ratio of 5% by mass; an alloy sheet containing Pb and Sb wherein Sb was contained at a ratio of 10% by mass; an alloy sheet containing Pb and Sb wherein Sb was contained at a ratio of 20% by mass; an alloy sheet containing Pb and Sb wherein Sb was contained at a ratio of 30% by mass; an alloy sheet containing Pb and Sb wherein Sb was contained at a ratio of 50% by mass; an alloy sheet containing Pb, Sn, and Sb wherein Sn was contained at a ratio of 2.5% by mass and wherein Sb was contained at a ratio of 2.5% by mass; an alloy sheet containing Pb, Sn, and Sb wherein Sn was contained at a ratio of 5% by mass and wherein Sb was contained at a ratio of 5% by mass; or an alloy sheet containing Pb, Sn, and Sb wherein Sn was contained at a ratio of 10% by mass and wherein Sb was contained at a ratio of 10% by mass was used to produce negative electrode current collectors in the same manner as (1) of Example group 1.

As the electrolyte solutions, an electrolyte solution containing no additives and an electrolyte solution containing 0.70 mol/L of sodium ion, 0.42 mol/L of magnesium ion, 0.29 mol/L of aluminum ion, 0.20 mol/L of phosphoric acid, and 0.24 mol/L of boric acid.

Using these negative electrode current collectors and the electrolyte solutions, lead-acid batteries of Examples 4, 8, 12, 16, 20 and 21 to 80 and lead-acid batteries of Comparative Examples 23 to 34 were produced by the method described in Example group 1 and the life performance test was carried out by the same method as that of Example group 1.

In addition, the lead-acid batteries of Examples 4, 8, 12, 16, and 20 using negative electrode current collectors having the surface layers containing Pb and Sn wherein Sn was contained at a ratio of 25% by mass and produced in this example group were the same as the lead-acid batteries of Examples 4, 8, 12, 16, and 20 produced in Example group 1.

The type of metal ions contained in the electrolyte solutions and the compositions of the surface layer and the life performance ratios were shown in Table 2 and Table 3. In Table 2 and Table 3, for example, "Pb-5% Sn" means a layer containing Pb and Sn wherein Sn was contained at a ratio of 5% by mass. Further, the life performance ratios of the lead-acid batteries (those using negative electrode current collector having no surface layer) of Comparative Examples 1, 5, 9, 13, 17, and 21 produced in Example group 1 were described in the proper columns in Table 2 and Table 3.

**[Table 2]**

| Composition of surface layer | No additive | | Containing Na⁺ | | Containing Mg²⁺ | |
|---|---|---|---|---|---|---|
| | Life performance ratio | Example | Life performance ratio | Example | Life performance ratio | Example |
| None | 100 | Comparative Example 1 | 71 | Comparative Example 5 | 70 | Comparative Example 9 |
| Pb-5%Sn | 158 | Comparative Example 23 | 220 | Example 21 | 231 | Example 33 |
| Pb-10%Sn | 184 | Comparative Example 24 | 278 | Example 22 | 303 | Example 34 |
| Pb-25%Sn | 194 | Comparative Example 22 | 311 | Example 4 | 352 | Example 8 |
| Pb-50%Sn | 206 | Comparative Example 25 | 344 | Example 23 | 375 | Example 35 |
| Sn | 211 | Comparative Example 26 | 367 | Example 24 | 389 | Example 36 |
| Pb-5%Sb | 161 | Comparative Example 27 | 225 | Example 25 | 232 | Example 37 |
| Pb-10%Sb | 187 | Comparative Example 28 | 279 | Example 26 | 301 | Example 38 |
| Pb-20%Sb | 197 | Comparative Example 29 | 322 | Example 27 | 348 | Example 39 |
| Pb-30%Sb | 206 | Comparative Example 30 | 358 | Example 28 | 367 | Example 40 |
| Pb-50%Sb | 213 | Comparative Example 31 | 371 | Example 29 | 377 | Example 41 |
| Pb-2.5%Sn-2.5%Sb | 171 | Comparative Example 32 | 222 | Example 30 | 240 | Example 42 |
| Pb-5%Sn-5%Sb | 186 | Comparative Example 33 | 269 | Example 31 | 308 | Example 43 |
| Pb-10%Sn -10%Sb | 194 | Comparative Example 34 | 315 | Example 32 | 340 | Example 44 |

**[Table 3]**

| Composition of surface layer | Containing Al³⁺ | | Containing phosphoric acid | | Containing boric acid | |
|---|---|---|---|---|---|---|
| | Life performance ratio | Example | Life performance ratio | Example | Life performance ratio | Example |
| None | 56 | Comparative Example 13 | 86 | Comparative Example 17 | 86 | Comparative Example 21 |
| Pb-5%Sn | 237 | Example 45 | 232 | Example 57 | 221 | Example 69 |
| Pb-10%Sn | 329 | Example 46 | 300 | Example 58 | 267 | Example 70 |
| Pb-25%Sn | 375 | Example 12 | 346 | Example 16 | 306 | Example 20 |
| Pb-50%Sn | 389 | Example 47 | 362 | Example 59 | 326 | Example 71 |
| Sn | 402 | Example 48 | 378 | Example 60 | 337 | Example 72 |
| Pb-5%Sb | 238 | Example 49 | 235 | Example 61 | 225 | Example 73 |
| Pb-10%Sb | 342 | Example 50 | 310 | Example 62 | 269 | Example 74 |
| Pb-20%Sb | 377 | Example 51 | 344 | Example 63 | 312 | Example 75 |
| Pb-30%Sb | 388 | Example 52 | 364 | Example 64 | 327 | Example 76 |
| Pb-50%Sb | 400 | Example 53 | 376 | Example 65 | 332 | Example 77 |
| Pb-2.5%Sn-2.5%Sb | 260 | Example 54 | 256 | Example 66 | 219 | Example 78 |
| Pb-5%Sn -5%Sb | 322 | Example 55 | 301 | Example 67 | 269 | Example 79 |
| Pb-10%Sn -10%Sb | 366 | Example 56 | 329 | Example 68 | 301 | Example 80 |

As is apparent from Table 2 and Table 3, in the lead-acid batteries of Examples 4, 8, 12, 16, 20, and 21 to 80 using electrolyte solutions containing sodium ion, magnesium ion, aluminum ion, phosphoric acid or boric acid and negative electrode current collectors having surface layers containing Pb and Sn, surface layers containing Sn, surface layers containing Pb and Sb, and surface layers containing Pb, Sn, and Sb, the life performance was improved.

Particularly, the lead-acid batteries using negative electrode current collectors having surface layers containing Pb and Sn wherein Sn was contained at a ratio of 10% by mass or more (Examples 4, 8, 12, 16, 20, 22, 23, 34, 35, 46, 47, 58, 59, 70, and 71), surface layers containing Sn (Examples 24, 36, 48, 60, and 72), surface layers containing Pb and Sb wherein Sb was contained at a ratio of10% by mass or more (Examples 26 to 29, 38 to 41, 50 to 53, 62 to 65, and 74 to 77), and surface layers containing Pb, Sn, and Sb wherein Sn was contained at a ratio of 5% by mass or more and wherein Sb was contained at a ratio of 5% by mass or more (Examples 31, 32, 43, 44, 55, 56, 67, 68, 79, and 80) were preferable since high life performance improvement effects were obtained regardless of the types of additives to be added to the electrolyte solutions.

In a comparison between lead-acid batteries using negative electrode current collectors having surface layers with the same composition, it was found that those using electrolyte solutions containing sodium ion, magnesium ion, aluminum ion, phosphoric acid, or boric acid had more significant life performance improvement effects than those using electrolyte solutions containing no additives (for example, see Comparative Example 24 and Examples 22, 34, 46, 58 and 70).

### <Example group 3>

Next, lead-acid batteries using electrolyte solutions containing sodium ion and phosphoric acid were investigated. Lead-acid batteries of Examples 81 to 84 were produced in the same manner as in Example group 1 except that electrolyte solutions prepared by adding sodium sulfate in a proper amount to give the content of 0.70 mol/L of Na⁺ and adding phosphoric acid in the amounts described in Table 4 were used. For comparison, lead-acid batteries of Comparative Examples 35 to 38 were produced using electrolyte solutions with the same composition as that of the electrolyte solutions of the lead-acid batteries of Examples 81 to 84 and negative electrode plates having no surface layer.

The life performance test was carried for the lead-acid batteries of Examples 81 to 84 and the lead-acid batteries of Comparative Examples 35 to 38 in the same manner as in Example group 1 and the results were shown in Table 4. The results of the life performance tests of the lead-acid battery of Comparative Example 5 and the lead-acid battery of Example 4 were described in the proper column in Table 4.

**[Table 4]**

| Content of | Content of | Absence of surface layer | | Presence of surface layer | |
|---|---|---|---|---|---|
| Na+ (mol/L) | phosphoric acid (mol/L) | Life performance ratio | Example | Life performance ratio | Example |
| 0.70 | 0 | 71 | Comparative Example 5 | 311 | Example 4 |
| 0.70 | 0.03 | 69 | Comparative Example 35 | 322 | Example 81 |
| 0.70 | 0.05 | 63 | Comparative Example 36 | 341 | Example 82 |
| 0.70 | 0.10 | 60 | Comparative Example 37 | 357 | Example 83 |
| 0.70 | 0.20 | 58 | Comparative Example 38 | 378 | Example 84 |

As is apparent from Table 4, it was found that the effect of the present invention could be exerted even for the lead-acid batteries using electrolyte solutions containing sodium ion and phosphoric acid.

### <Other Embodiments>

The present invention is not limited to the embodiments described by the foregoing description and drawings, and for example, the following embodiments are also included within the technical scope of the present invention.
(1) Although the electrolyte solutions containing sodium ion and phosphoric acid were shown in the above-mentioned examples, electrolyte solutions containing potassium ion and phosphoric acid and electrolyte solutions containing magnesium ion and boric acid and other combinations may be used.
(2) Although the surface layers were formed by a rolling method in the above-mentioned examples, the surface layers may be formed by a hot-dipping method.
(3) Although the surface layers were formed in the entire region of an ear part and the entire region of a rim part in the above-mentioned examples, lead-acid batteries may have surface layers formed only in the ear part, surface layers formed only in the rim part, or surface layers formed only in partial regions of the ear part and the rim part.

## Claims

1. A lead-acid battery comprising a positive electrode plate, a negative electrode plate, and an electrolyte solution, wherein
the negative electrode plate comprises a negative electrode current collector having a lattice-like grid part, a rim part continuously formed in the rim of the grid part, and an ear part formed to protrude from the rim part for current collection; wherein
a surface layer containing an alloy or a metal selected from a Pb-Sn-based alloy, a Pb-Sb-based alloy, a Pb-Sn-Sb-based alloy, and Sn is formed on the surface of at least one of the rim part and the ear part; and wherein
the electrolyte solution contains one or more substances selected from sodium ion, potassium ion, magnesium ion, aluminum ion, phosphoric acid, and boric acid.

2. The lead-acid battery according to claim 1, wherein the surface layer is a layer containing Pb and Sn where Sn is contained at a ratio of 10% by mass or more, a layer containing Pb and Sb where Sb is contained at a ratio of 10% by mass or more, a layer containing Pb, Sn, and Sb where Sn and Sb are contained at a ratio of 10% by mass or more in total, or a layer containing Sn.

3. The lead-acid battery according to claim 1, wherein the electrolyte solution contains one or more substances selected from 0.42 mol/L or less of magnesium ion, 0.29 mol/L or less of aluminum ion, and 0.20 mol/L or less of phosphoric acid.

4. The lead-acid battery according to claim 2, wherein the electrolyte solution contains one or more substances selected from 0.42 mol/L or less of magnesium ion, 0.29 mol/L or less of aluminum ion, and 0.20 mol/L or less of phosphoric acid.

5. The lead-acid battery according to claim 1, wherein the surface layer is formed in the entire region of the rim part and the entire region of the ear part.

6. The lead-acid battery according to claim 2, wherein the surface layer is formed in the entire region of the rim part and the entire region of the ear part.

7. The lead-acid battery according to claim 3, wherein the surface layer is formed in the entire region of the rim part and the entire region of the ear part.

8. The lead-acid battery according to claim 4, wherein the surface layer is formed in the entire region of the rim part and the entire region of the ear part.

9. The lead-acid battery according to one of claims 1 to 8, wherein the surface layer has a thickness of 5 µm or more and 200 µm or less.

10. A method for manufacturing a lead-acid battery including a positive electrode plate, a negative electrode plate, a separator, and an electrolyte solution, wherein the negative electrode plate includes a negative electrode current collector having a lattice-like grid part, a rim part continuously formed in the rim of the grid part, and an ear part formed to protrude from the rim part for current collection, the method comprising the steps of:
producing a rolled sheet by rolling a laminated body obtained by laminating a sheet containing an alloy or a metal selected from a Pb-Sn-based alloy, a Pb-Sb-based alloy, a Pb-Sn-Sb-based alloy, and Sn on both faces of a lead-containing plate-like substrate;
producing a negative electrode plate by using a negative electrode current collector obtained by arranging the rolled sheet as a surface layer in a portion corresponding to at least one of the rim part and the ear part and expanding the rolled sheet;
housing an electrode plate group obtained by stacking or winding the negative electrode plate and a positive electrode plate through a separator interposed therebetween in a container; and
injecting an electrolyte solution containing one or more substances selected from sodium ion, potassium ion, magnesium ion, aluminum ion, phosphoric acid, and boric acid to the contained where the electrode plate group is housed.

11. The method for manufacturing a lead-acid battery according to claim 10, wherein in the step of producing a rolled sheet, the sheet to be laminated on the substrate contains an alloy or a metal selected from a Pb-Sn-based alloy containing 10% by mass or more of Sn, a Pb-Sb-based alloy containing 10% by mass or more of Sb, a Pb-Sn-Sb-based alloy containing 10% by mass or more of Sn and Sb in total, and Sn.

12. The method for manufacturing a lead-acid battery according to claim 10, wherein the electrolyte solution contains one or more substances selected from 0.42 mol/L or less of magnesium ion, 0.29 mol/L or less of aluminum ion, and 0.20 mol/L or less of phosphoric acid.

13. The method for manufacturing a lead-acid battery according to claim 11, wherein the electrolyte solution contains one or more substances selected from 0.42 mol/L or less of magnesium ion, 0.29 mol/L or less of aluminum ion, and 0.20 mol/L or less of phosphoric acid.

14. The method for manufacturing a lead-acid battery according to claim 10, wherein in the step of producing a negative electrode plate, a negative electrode current collector obtained by arranging the rolled sheet as a surface layer in portions corresponding to the entire region of the rim part and the entire region of the ear part and expanding the rolled sheet is used.

15. The method for manufacturing a lead-acid battery according to claim 11, wherein in the step of producing a negative electrode plate, a negative electrode current collector obtained by arranging the rolled sheet as a surface layer in portions corresponding to the entire region of the rim part and the entire region of the ear part and expanding the rolled sheet is used.

16. The method for manufacturing a lead-acid battery according to claim 12, wherein in the step of producing a negative electrode plate, a negative electrode current collector obtained by arranging the rolled sheet as a surface layer in portions corresponding to the entire region of the rim part and the entire region of the ear part and expanding the rolled sheet is used.

17. The method for manufacturing a lead-acid battery according to claim 13, wherein in the step of producing a negative electrode plate, a negative electrode current collector obtained by arranging the rolled sheet as a surface layer in portions corresponding to the entire region of the rim part and the entire region of the ear part and expanding the rolled sheet is used.

18. The method for manufacturing a lead-acid battery according to one of claims 10 to 17, wherein in the step of producing a negative electrode plate, a negative electrode current collector having a surface layer derived from the rolled sheet with a thickness of 5 µm or more and 200 µm or less in the surface is used.

## Patentansprüche

1. Blei-Säure-Batterie, umfassend eine positive Elektrodenplatte, eine negative Elektrodenplatte und eine Elektrolytlösung, wobei
die negative Elektrodenplatte einen negative Elektrode-Stromsammler mit einem netzartigen Gitterteil, einem Einfassungsteil, kontinuierlich gebildet in der Einfassung des Gitterteils, und einem Ohrenteil, gebildet, um aus dem Einfassungsteil zur Stromsammlung herauszuragen, umfasst, wobei
eine Oberflächenschicht, enthaltend eine Legierung oder ein Metall, ausgewählt aus einer Pb-Sn-basierenden Legierung, einer Pb-Sb-basierenden Legierung, einer Pb-Sn-Sb-basierenden Legierung und Sn, auf der Oberfläche von mindestens einem von dem Einfassungsteil und dem Ohrenteil gebildet ist, und wobei die Elektrolytlösung eine oder mehrere Substanzen, ausgewählt aus Natriumion, Kaliumion, Magnesiumion, Aluminiumion, Phosphorsäure und Borsäure, enthält.

2. Blei-Säure-Batterie gemäß Anspruch 1, wobei die Oberflächenschicht eine Schicht ist, enthaltend Pb und Sn, wobei Sn in einem Anteil von 10 Masse-% oder mehr enthalten ist, eine Schicht, enthaltend Pb und Sb, wobei Sb in einem Anteil von 10 Masse-% oder mehr enthalten ist, eine Schicht, enthaltend Pb, Sn und Sb, wobei Sn und Sb in einem Anteil von 10 Masse-% oder mehr im Gesamten enthalten sind, oder eine Schicht, enthaltend Sn, ist.

3. Blei-Säure-Batterie gemäß Anspruch 1, wobei die Elektrolytlösung ein oder mehrere Substanzen, ausgewählt aus 0,42 Mol/L oder weniger Magnesiumionen, 0,29 Mol/L oder weniger Aluminiumionen und 0,20 Mol/L oder weniger Phosphorsäure, enthält.

4. Blei-Säure-Batterie gemäß Anspruch 2, wobei die Elektrolytlösung ein oder mehrere Substanzen, ausgewählt aus 0,42 Mol/L oder weniger Magnesiumionen, 0,29 Mol/L oder weniger Aluminiumionen und 0,20 Mol/L oder weniger Phosphorsäure, enthält.

5. Blei-Säure-Batterie gemäß Anspruch 1, wobei die Oberflächenschicht in dem gesamten Bereich des Einfassungsteils und dem gesamten Bereich des Ohrenteils gebildet ist.

6. Blei-Säure-Batterie gemäß Anspruch 2, wobei die Oberflächenschicht in dem gesamten Bereich des Einfassungsteils und dem gesamten Bereich des Ohrenteils gebildet ist.

7. Blei-Säure-Batterie gemäß Anspruch 3, wobei die Oberflächenschicht in dem gesamten Bereich des Einfassungsteils und dem gesamten Bereich des Ohrenteils gebildet ist.

8. Blei-Säure-Batterie gemäß Anspruch 4, wobei die Oberflächenschicht in dem gesamten Bereich des Einfassungsteils und dem gesamten Bereich des Ohrenteils gebildet ist.

9. Blei-Säure-Batterie gemäß einem der Ansprüche 1 bis 8, wobei die Oberflächenschicht eine Dicke von 5 µm oder mehr und 200 µm oder weniger aufweist.

10. Verfahren zur Herstellung einer Blei-Säure-Batterie, welche eine positive Elektrodenplatte, eine negative Elektrodenplatte, einen Separator und eine Elektrolytlösung einschließt, wobei die negative Elektrodenplatte einen negative Elektrode-Stromsammler mit einem netzartigen Gitterteil, einem Einfassungsteil, kontinuierlich gebildet in der Einfassung des Gitterteils, und einem Ohrenteil, gebildet, um aus dem Einfassungsteil zur Stromsammung herauszuragen, einschließt, wobei das Verfahren die Schritte umfaßt:
das Herstellen eines gewalzten Bleches durch Walzen eines laminierten Körpers, erhalten durch Laminieren eines Bleches, enthaltend eine Legierung oder ein Metall, ausgewählt aus einer Pb-Sn-basierenden Legierung, einer Pb-Sbbasierenden Legierung, einer Pb-Sn-Sb-basierenden Legierung und Sn, auf beiden Flächen eines bleihaltigen plattenartigen Substrats,
das Herstellen einer negativen Elektrodenplatte unter Verwendung eines negative Elektrode-Stromsammlers, erhalten durch Anordnen des gewalzten Bleches als eine Oberflächenschicht in einem Abschnitt entsprechend mindestens einem von dem Einfassungsteil und dem Ohrenteil und Expandieren des gewalzten Blechs,
das Anordnen einer Elektrodenplattengruppe, erhalten durch Aufeinanderstapeln oder Wickeln der negativen Elektrodenplatte und einer positiven Elektrodenplatte über einen dazwischen angeordneten Separator in einem Behälter und
das Injizieren einer Elektrolytlösung, enthaltend ein oder mehrere Substanzen, ausgewählt aus Natriumion, Kaliumion, Magnesiumion, Aluminiumion, Phosphorsäure und Borsäure, in den Behälter, worin die Elektrodenplattengruppe angeordnet ist.

11. Verfahren zur Herstellung einer Blei-Säure-Batterie gemäß Anspruch 10, wobei in dem Schritt des Erzeugens eines gewalzten Blechs das auf das Substrat zu laminierende Blech eine Legierung oder ein Metall, ausgewählt aus einer PbSn-basierenden Legierung enthaltend 10 Masse-% oder mehr Sn, einer Pb-Sbbasierenden Legierung enthaltend 10 Masse-% oder mehr Sb, einer Pb-Sn-Sbbasierenden Legierung enthaltend 10 Masse-% oder mehr Sn und Sb im Gesamten und Sn, enthält.

12. Verfahren zur Herstellung einer Blei-Säure-Batterie gemäß Anspruch 10, wobei die Elektrolytlösung ein oder mehrere Substanzen, ausgewählt aus 0,42 Mol/L oder weniger Magnesiumionen, 0,29 Mol/L oder weniger Aluminiumionen und 0,20 Mol/L oder weniger Phosphorsäure, enthält.

13. Verfahren zur Herstellung einer Blei-Säure-Batterie gemäß Anspruch 11, wobei die Elektrolytlösung ein oder mehrere Substanzen, ausgewählt aus 0,42 Mol/L oder weniger Magnesiumionen, 0,29 Mol/L oder weniger Aluminiumionen und 0,20 Moi/L oder weniger Phosphorsäure, enthält.

14. Verfahren zur Herstellung einer Blei-Säure-Batterie gemäß Anspruch 10, wobei in dem Schritt des Herstellens einer negativen Elektrodenplatte ein negative Elektrode-Stromsammler, erhalten durch Anordnen des gewalzten Bleches als einer Oberflächenschicht in Abschnitten entsprechend dem gesamten Bereich des Einfassungsteils und dem gesamten Bereich des Ohrenteils und Expandieren des gewalzten Bleches, verwendet wird.

15. Verfahren zur Herstellung einer Blei-Säure-Batterie gemäß Anspruch 11, wobei in dem Schritt des Herstellens einer negativen Elektrodenplatte ein negative Elektrode-Stromsammler, erhalten durch Anordnen des gewalzten Bleches als einer Oberflächenschicht in Abschnitten entsprechend dem gesamten Bereich des Einfassungsteils und dem gesamten Bereich des Ohrenteils und Expandieren des gewalzten Bleches, verwendet wird.

16. Verfahren zur Herstellung einer Blei-Säure-Batterie gemäß Anspruch 12, wobei in dem Schritt des Herstellens einer negativen Elektrodenplatte ein negative Elektrode-Stromsammler, erhalten durch Anordnen des gewalzten Bleches als einer Oberflächenschicht in Abschnitten entsprechend dem gesamten Bereich des Einfassungsteils und dem gesamten Bereich des Ohrenteils und Expandieren des gewalzten Bleches, verwendet wird.

17. Verfahren zur Herstellung einer Blei-Säure-Batterie gemäß Anspruch 13, wobei in dem Schritt des Herstellens einer negativen Elektrodenplatte ein negative Elektrode-Stromsammler, erhalten durch Anordnen des gewalzten Bleches als einer Oberflächenschicht in Abschnitten entsprechend dem gesamten Bereich des Einfassungsteils und dem gesamten Bereich des Ohrenteils und Expandieren des gewalzten Bleches, verwendet wird.

18. Verfahren zur Herstellung einer Blei-Säure-Batterie gemäß einem der Ansprüche 10 bis 17, wobei in dem Schritt des Herstellens einer negativen Elektrodenplatte ein negative Elektrode-Stromsammler mit einer Oberflächenschicht, abgeleitet von dem gewalzten Blech, mit einer Dicke von 5 µm oder mehr und 200 µm oder weniger in der Oberfläche verwendet wird.

## Revendications

1. Batterie au plomb comprenant une plaque d'électrode positive, une plaque d'électrode négative et une solution électrolytique, dans laquelle :
la plaque d'électrode négative comprend un collecteur de courant d'électrode négative présentant une partie de grille en forme de treillis, une partie de bord formée de manière continue sur le bord de la partie de grille, et une partie en oreille formée de manière à s'étendre à partir de la partie de bord afin d'assurer la collecte du courant ; dans laquelle :
une couche de surface contenant un alliage ou un métal sélectionné à partir d'un alliage à base de Pb-Sn, un alliage à base de Pb-Sb, un alliage à base de Pb-Sn-Sb, et de Sn est formée sur la surface d'au moins l'une de la partie de bord et de la partie en oreille ; et dans laquelle :
la solution électrolytique contient une ou plusieurs substances sélectionnées à partir d'ion sodium, d'ion potassium, d'ion magnésium et d'ion aluminium, d'acide phosphorique, et d'acide borique.

2. Batterie au plomb selon la revendication 1, dans laquelle la couche de surface est une couche contenant du Pb et du Sn dans laquelle Sn est contenu en un rapport en masse supérieur ou égal à 10 %, une couche contenant du Pb et du Sb dans laquelle Sb est contenu en un rapport en masse supérieur ou égal à 10%, une couche contenant du Pb, du Sn, et du Sb dans laquelle Sn et Sb sont au total contenus en un rapport en masse supérieur ou égal à 10%, ou une couche contenant du Sn.

3. Batterie au plomb selon la revendication 1, dans laquelle la solution électrolytique contient une ou plusieurs substances sélectionnées à partir d'ion magnésium à 0,42 mole/l ou moins, d'ion aluminium à 0,29 mole/l ou moins, et d'acide phosphorique à 0,20 mole/l ou moins.

4. Batterie au plomb selon la revendication 2, dans laquelle la solution électrolytique contient une ou plusieurs substances sélectionnées à partir d'ion magnésium à 0,42 mole/l ou moins, d'ion aluminium à 0,29 mole/l ou moins, et d'acide phosphorique à 0,20 mole/l ou moins.

5. Batterie au plomb selon la revendication 1, dans laquelle la couche de surface est formée sur la totalité de la zone de la partie de bord et la totalité de la zone de la partie en oreille.

6. Batterie au plomb selon la revendication 2, dans laquelle la couche de surface est formée sur la totalité de la zone de la partie de bord et la totalité de la zone de la partie en oreille.

7. Batterie au plomb selon la revendication 3, dans laquelle la couche de surface est formée sur la totalité de la zone de la partie de bord et la totalité de la zone de la partie en oreille.

8. Batterie au plomb selon la revendication 4, dans laquelle la couche de surface est formée sur la totalité de la zone de la partie de bord et la totalité de la zone de la partie en oreille.

9. Batterie au plomb selon l'une des revendications 1 à 8, dans laquelle la couche de surface présente une épaisseur supérieure ou égale à 5 µm et inférieure ou égale à 200 µm.

10. Procédé de fabrication d'une batterie au plomb comportant une plaque d'électrode positive, une plaque d'électrode négative, un séparateur et une solution électrolytique, dans lequel la plaque d'électrode négative comporte un collecteur de courant d'électrode négative présentant une partie de grille en forme de treillis, une partie de bord formée de manière continue sur le bord de la partie de grille et une partie en oreille formée de manière à s'étendre à partir de la partie de bord afin d'assurer la collecte du courant, le procédé comprenant les étapes de :
production d'une feuille enroulée en enroulant un corps laminé obtenu par laminage d'une feuille contenant un alliage ou un métal sélectionné à partir d'un alliage à base de Pb-Sn, un alliage à base de Pb-Sb, un alliage à base de Pb-Sn-Sb, et de Sn sur les deux faces d'un substrat en forme de plaque contenant du plomb ;
production d'une plaque d'électrode négative en utilisant un collecteur de courant d'électrode négative obtenu par agencement de la feuille enroulée sous la forme d'une couche de surface dans une partie correspondant à au moins l'une de la partie de bord et de la partie en oreille, et expansion de la feuille enroulée ;
intégration d'un groupe de plaques d'électrode obtenu par empilage ou enroulement de la plaque d'électrode négative et d'une plaque d'électrode positive par l'intermédiaire d'un séparateur interposé entre les deux dans un conteneur ; et
injection d'une solution électrolytique contenant une ou plusieurs substances sélectionnées à partir d'ion sodium, d'ion potassium, d'ion magnésium, d'ion aluminium, d'acide phosphorique et d'acide borique dans le conteneur, dans lequel le groupe de plaques d'électrode est intégré.

11. Procédé de fabrication d'une batterie au plomb selon la revendication 10, dans lequel, dans l'étape de production d'une feuille enroulée, la feuille à laminer sur le substrat contient un alliage ou un métal sélectionné à partir d'un alliage à base de Pb-Sn contenant 10% en masse ou plus de Sn, un alliage à base de Pb-Sb contenant 10% en masse ou plus de Sb, un alliage à base de Pb-Sn-Sb contenant au total 10% en masse ou plus de Sn et de Sb, et de Sn.

12. Procédé de fabrication d'une batterie au plomb selon la revendication 10, dans lequel la solution électrolytique contient une ou plusieurs substances sélectionnées à partir d'ion magnésium à 0,42 mole/l ou moins, d'ion aluminium à 0,29 mole/l ou moins et d'acide phosphorique à 0,20 mole/l ou moins.

13. Procédé de fabrication d'une batterie au plomb selon la revendication 11, dans lequel la solution électrolytique contient une ou plusieurs substances sélectionnées à partir d'ion magnésium à 0,42 mole/l ou moins, d'ion aluminium à 0,29 mole/l ou moins et d'acide phosphorique à 0,20 mole/l ou moins.

14. Procédé de fabrication d'une batterie au plomb selon la revendication 10, dans lequel, dans l'étape de production d'une plaque d'électrode négative, un collecteur de courant d'électrode négative, obtenu par agencement de la feuille enroulée sous la forme d'une couche de surface dans des parties correspondant à la totalité de la zone de la partie de bord et à la totalité de la zone de la partie en oreille et expansion de la feuille enroulée, est utilisé.

15. Procédé de fabrication d'une batterie au plomb selon la revendication 11, dans lequel, dans l'étape de production d'une plaque d'électrode négative, un collecteur de courant d'électrode négative, obtenu par agencement de la feuille enroulée sous la forme d'une couche de surface dans des parties correspondant à la totalité de la zone de la partie de bord et à la totalité de la zone de la partie en oreille et expansion de la feuille enroulée, est utilisé.

16. Procédé de fabrication d'une batterie au plomb selon la revendication 12, dans lequel, dans l'étape de production d'une plaque d'électrode négative, un collecteur de courant d'électrode négative, obtenu par agencement de la feuille enroulée sous la forme d'une couche de surface dans des parties correspondant à la totalité de la zone de la partie de bord et à la totalité de la zone de la partie en oreille et expansion de la feuille enroulée, est utilisé.

17. Procédé de fabrication d'une batterie au plomb selon la revendication 13, dans lequel, dans l'étape de production d'une plaque d'électrode négative, un collecteur de courant d'électrode négative, obtenu par agencement de la feuille enroulée sous la forme d'une couche de surface dans des parties correspondant à la totalité de la zone de la partie de bord et à la totalité de la zone de la partie en oreille et expansion de la feuille enroulée, est utilisé.

18. Procédé de fabrication d'une batterie au plomb selon l'une des revendications 10 à 17, dans lequel, dans l'étape de production d'une plaque d'électrode négative, un collecteur de courant d'électrode négative, présentant une couche de surface dérivée de la feuille enroulée avec une épaisseur supérieure ou égale à 5 µm et inférieure ou égale à 200 µm sur la surface, est utilisé.
